# EUROPÄISCHE PATENTANMELDUNG

(11) **EP 2 052 620 A1**
(43) Veröffentlichungstag der Anmeldung: **29.04.2009**
(21) Anmeldenummer: 07020664.4
(22) Anmeldetag: 23.10.2007
(51) Int. Cl.: A23B 4/22, A23L 1/325

(54) **Verfahren zur Herstellung fermentierter Fischerzeugnisse**

(71) Anmelder: "Deutsche See" GmbH, 27572 Bremerhaven (DE)
(72) Erfinder: Koch, Prof.Dr. Maria, DE-27578 Bremerhaven (DE); Hemmy, Dr. Britta, DE-27570 Bremerhaven (DE)
(74) Vertreter: Hauck Patent- und Rechtsanwälte

(57) **Zusammenfassung**

Verfahren zur Herstellung fermentierter Fischerzeugnisse, bei denen der Fisch oder Fischteile enzymatisch reifen, wobei vor oder während des Reifungsprozesses dem Fisch oder den Fischteilen Transglutaminase zugesetzt wird.

## Beschreibung

Die vorliegende Erfindung betrifft ein Verfahren zur Herstellung fermentierter Fischerzeugnisse, bei dem der Fisch und/oder Fischteile enzymatisch reifen.

Matjeshering ist gemäß den "Leitsätzen für Fisch, Krebse und Weichtiere und Erzeugnisse daraus" hergestellt aus Heringen, ohne äußerlich erkennbaren Ansatz von Milch oder Rogen, deren Fettgehalt im eßbaren Teil mindestens 12 Prozent beträgt. Der Hering ist mild gesalzen und durch körpereigene proteolytische Enzyme gereift, die hauptsächlich aus den beim Kehlen im Fisch verbliebenen Magenanhangsdrüsen stammen. Echter Matjes reift teilausgenommen, wobei die Reifung des Matjes hauptsächlich durch die fischeigenen proteolytischen Enzyme erfolgt. Das Salzen dient primär der Konservierung. Eine hohe Salzkonzentration trägt jedoch auch zur Härtung des Gewebes durch Denaturierung und Koagulation der Muskelproteine bei und bildet so einen Beitrag zur Ausbildung von Aroma und Textur. Die Proteasen, die für die Matjesreifung verantwortlich sind, stammen aus dem Magen-Darm-Kanal, den Pylorus-Anhängen und aus der Muskulatur.

Aufgrund der langen Reifezeit von echtem Matjes, werden Schnellreifverfahren eingesetzt, die es erlauben, matjesartigen Produkte innerhalb weniger Tage in Filetform reifen zu lassen. Beim Matjesfilet nordischer Art beispielsweise werden Heringsfilets in ein Reifebad gegeben. Wie beim echten Matjes ist auch beim Matjesfilet nordischer Art der Fettgehalt mindestens 12 Prozent.

Bei der Herstellung von Matjesfilet nordischer Art zeigt, insbesondere bei sehr fetter Rohware, das Endprodukt gelegentlich eine sehr weiche gegebenenfalls sogar eine zerstörte Textur vor allem im Schwanzbereich.

Der Erfindung liegt die Aufgabe zugrunde ein Verfahren zur Herstellung fermentierter Fischerzeugnisse bereitzustellen, bei dem der Fisch oder Teile von diesem einem enzymatischen Reifeprozeß unterzogen werden und, insbesondere auch bei sehr fetthaltigen Ausgangsprodukten, eine nicht zu weiche Textur des Endprodukts zeigen.

Erfindungsgemäß wird die Aufgabe durch ein Verfahren mit den Merkmalen des Anspruchs 1 gelöst. Vorteilhafte Ausgestaltungen bilden die Gegenstände der Unteransprüche.

Das erfindungsgemäße Verfahren dient zur Herstellung fermentierter Fischerzeugnisse, bei denen der Fisch oder Fischteile enzymatisch reifen. Erfindungsgemäß wird vor oder während des Reifungsprozesses dem Fisch oder den Fischteilen Transglutaminase zugesetzt. Das Enzym Transglutaminase katalysiert inter- und intramolekulare Quervernetzungen von Proteinmolekülen durch ε(γ-Glutamyl)lysin-Isopeptidbindungen. Diese Quervernetzungen der Proteinmoleküle führen zu einer Verfestigung der Textur und vermeiden somit, daß eine zu weiche oder zerstörte Textur auftritt.

Die Verwendung des Enzyms Transglutaminase ist beispielsweise aus DE 10 2005 038 342 bekannt. Hier wird Transglutaminase zur Verfestigung der Textur während eines Räucherprozesses eingesetzt. Aus "Deutsche Lebensmittel-Rundschau Heft 5, 2003, Seiten 181 - 187" ist im Kontext der Surimiproduktion der Einsatz von Transglutaminase in der Fischproduktion bekannt.

Bei dem erfindungsgemäßen Verfahren wird das Enzym Transglutaminase vor oder während des enzymatischen Reifeprozesses eingesetzt. Überraschenderweise hat sich bei der Erfindung herausgestellt, daß trotz der an sich gegenläufigen Wirkung eines enzymatischen Reifebads und einer Transglutaminasebehandlung, beide Verfahrensschritte kombiniert werden können und trotzdem ein fermentiertes Fischerzeugnis entsteht, das auch bei hohem Fettgehalt eine intakte Textur besitzt. Denn die Transglutaminase wirkt dabei im Reifeprozeß keineswegs der Reifung entgegen, sondern fördert lediglich die Texturverfestigung.

In einer bevorzugten Weiterführung des erfindungsgemäßen Verfahrens werden die Heringsfilets im frischen oder aufgetauten Zustand zu Matjesfilets nordischer Art verarbeitet. In einer bevorzugten Weiterführung des erfindungsgemäßen Verfahrens wird der Reifeprozeß in einem Reifebad durchgeführt, dem das Enzym Transglutaminase zugesetzt wurde.

Das Reifebad enthält zumindest Wasser, Salz, einen oder mehrere Zuckerstoffe, Genußsäure und kann ein oder mehrere Reifungsenzyme sowie eventuell weitere Zusätze enthalten. Bei der Genußsäure handelt es sich bevorzugt um Essig-, Wein- und/oder Zitronensäure.

Bei dem erfindungsgemäßen Verfahren kann der Reifeprozeß bei 0° bis 12 ° Celsius über mehrere Tage durchgeführt werden.
Das erfindungsgemäße Verfahren wird nachfolgend an einem Beispiel näher erläutert:

In einem ersten Verfahrensschritt werden Heringsfilets gewaschen. Bei den Heringsfilets kann es sich um frische Heringsfilets oder um aufgetaute Heringsfilets handeln. Die gewaschenen Heringsfilets werden abgewogen und in einem Faß oder Bottich mit einem Reifebad versehen. Das Reifebad besitzt folgende Zusammensetzung:

| **Komponente** | **Anteil (Gew-%)** |
|---|---|
| Wasser | 80 - 82 |
| NaCl | 11 - 15 |
| Säuerungsmittel (Weinsäure) | 0,9 |
| Reifungsmittel mit Enzymen | 1,4 |
| Saccharose | 0,9 |
| Glucose | 2,5 |
| Transglutaminase 100 IE g⁻¹ | 0,05 - 1 |

Bei der Transglutaminase mit 100 IE g⁻¹ handelt es sich beispielsweise um ein Präparat der Firma Ajinomoto Foods Deutschland GmbH, das unter dem Namen Activa WM vertrieben wird. Das Präparat besitzt eine Zusammensetzung von 1 Prozent des Enzyms Transglutaminase und 99 Prozent Maltodextrin.

In dem Beispiel wurde das Verhältnis von Reifebad zu Fisch mit 1:1 gewährt. Hieraus ergibt sich eine Konzentration von 0,0005 - 0,01 Gew-% reine Transglutaminase. Die Reifung erfolgte für fünf Tage bei einer Temperatur von 6 - 8 Grad Celsius.

Bei dem Verfahren wurde zur Gewährleistung der Aktivität der Transglutaminase im Reifebad ein pH-Wert von 4 - 9 eingestellt.

Eine Auswertung der so hergestellten Matjesfilets nordischer Art ergab, daß gegenüber einer Standardprobe eine Verfestigung von 9 - 47 Prozent, bezogen auf die Scherkraft bei einem Einsatz 0,0015 - 0,005 Gew-% Transglutaminase erzielt wurde.

Neben dem im Beispiel dargestellten Verfahren für Matjesfilets nordischer Art sind weitere Fermantationsprozesse bei der Fischproduktion bekannt, bei denen ebenfalls Schwankungen in der Qualität durch die Zugabe des Enzyms Transglutaminase ausgeglichen werden können. Hierzu zählen Prozesse mit gesalzenen Fischen, bei denen durch Salzen von frischen oder gefrorenen Fischen oder Fischteilen fermentiert werden. Auch können die Fische enzymatisch gegart und/oder gereift sein. Beispiel hierfür sind Heringe mit der Bezeichnung Salz-, Matjes-, Fettheringe, Milder Vollhering, Vollhering, Wrackhering. Auch Sardellen, beispielsweise Sardellen und Salzsardellen können durch die Zugabe von Transglutaminase behandelt werden. Auch bei sonstigen Fischen wie beispielsweise bei Kabeljau, Leng, Lumb, Pollack und anderen Gadidae ist die Zugabe von Transglutaminase möglich. Ferner erfolgt auch bei Anchosen wie beispielsweise Heringen und Sprotten, Matjes schwedischer Art, Hering nach Matjesart gesalzen, Kräuterhering, Kräutersprotten, Makrelen, Lachs und Graved Lachs eine enzymatische Reifung in Gegenwart von Salz und Zucker, die durch den Zusatz von Transglutaminase in ihrer Qualität verbessert werden können.

## Patentansprüche

1. Verfahren zur Herstellung fermentierter Fischerzeugnisse, bei denen Fisch oder Fischteile enzymatisch reifen, **dadurch gekennzeichnet daß**, vor oder während des Reifungsprozesses dem Fisch oder den Fischteilen Transglutaminase zugesetzt wird.

2. Verfahren nach Anspruch 1, **dadurch gekennzeichnet, daß** Heringsfilets im frischen oder aufgetauten Zustand zu Matjesfilets nordischer Art verarbeitet werden.

3. Verfahren nach Anspruch 1 oder 2, **dadurch gekennzeichnet, daß** der Fisch oder die Fischteile in einem Reifebad einem Reifeprozeß unterzogen werden, wobei die Transglutaminase dem Reifebad zugesetzt ist.

4. Verfahren nach Anspruch 3, **dadurch gekennzeichnet, daß** das Reifebad Wasser, Salz, einen oder mehrere Zuckerstoffe und Genußsäure enthält.

5. Verfahren nach Anspruch 3, **dadurch gekennzeichnet, daß** das Reifebad zusätzlich ein oder mehrere Reifungsenzyme enthält.

6. Verfahren nach Anspruch 4 oder 5, **dadurch gekennzeichnet, daß** als Genußsäuren Essig-, Wein- und/oder Zitronensäure vorgesehen sind.

7. Verfahren nach einem der Ansprüche 3 bis 6, **dadurch gekennzeichnet, daß** der Reifungsprozeß bei 0° Celsius bis 12°Celsius mehr als einen Tag andauert.
